# FASCICULE DE BREVET EUROPEEN

(11) **EP 2 430 693 B1**
(45) Date de publication et mention de la délivrance du brevet: **20.03.2013**
(21) Numéro de dépôt: 10717661.2
(22) Date de dépôt: 10.05.2010
(51) Int. Cl.: H01M 4/88, H01M 4/86, H01M 8/06, H01M 8/12

(54) **CELLULE DE PILE À COMBUSTIBLE HAUTE TEMPÉRATURE À REFORMAGE INTERNE D'HYDROCARBURES.**
ZELLE FÜR EINE HOCHTEMPERATUR-BRENNSTOFFZELLE MIT INTERNER KOHLENWASSERSTOFFREFORMIERUNG
CELL FOR A HIGH-TEMPERATURE FUEL CELL WITH INTERNAL HYDROCARBON REFORMING

(30) Priorité: 11.05.2009 FR 0953109
(43) Date de publication de la demande: 21.03.2012
(73) Titulaire: Commissariat à l'Énergie Atomique et aux Énergies Alternatives, 75015 Paris (FR)
(72) Inventeur: LAURENCIN, Jérôme, F-38360 Sassenage (FR); LAUCOURNET, Richard, F-38500 La Buisse (FR); MOUGIN, Julie, F-38530 Pontcharra (FR)
(74) Mandataire: Ilgart, Jean-Christophe
(86) Numéro de dépôt international: PCT/EP2010/056376
(87) Numéro de publication internationale: WO 2010/130692

(56) Documents cités:
- EP-A- 1 617 501
- WO-A-03/075388
- US-A1- 2005 170 234
- US-A1- 2007 015 015

## Description

### DOMAINE TECHNIQUE

L'invention concerne une cellule de pile à combustible haute température (« SOFC » ou « Solid Oxide Fuel Cell » en langue anglaise), plus précisément une cellule de pile à combustible haute température à métal support (« MSC » ou « Metal Supported Cell » en langue anglaise), dans laquelle on réalise le reformage interne d'hydrocarbures tels que le gaz naturel.

Le domaine technique de l'invention peut ainsi être défini de manière générale comme celui des nouvelles technologies de l'énergie, plus particulièrement comme celui des piles à combustible haute température (« SOFC ») et, encore plus précisément, comme celui des cellules des piles à combustible haute température à métal support.

### ÉTAT DE LA TECHNIQUE ANTÉRIEURE

Les cellules à métal support sont considérées pour l'application SOFC comme les cellules de 3^{ème} génération (les cellules à électrolyte support formant la génération 1 et les cellules à anode support la génération 2) [1].

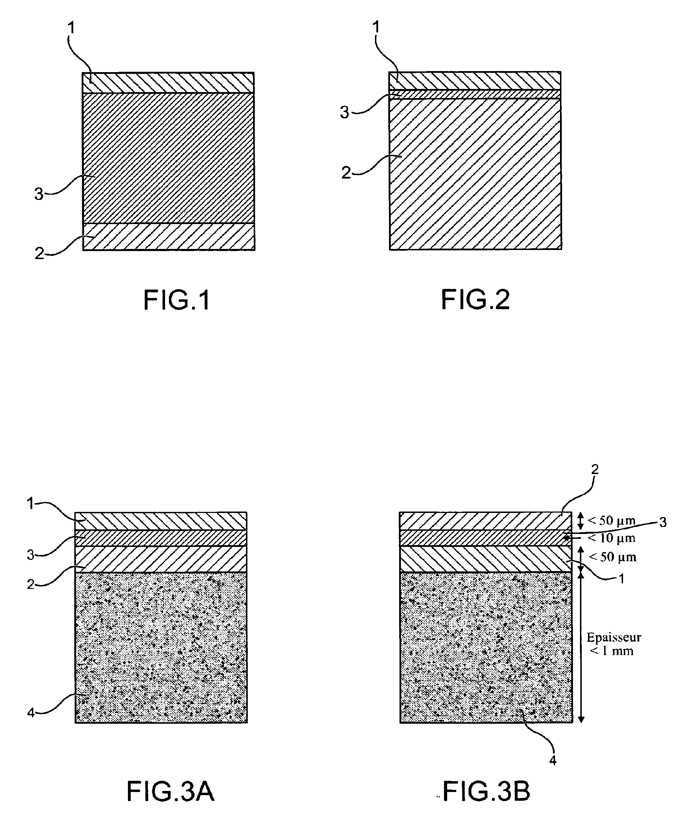

La première génération de cellules d'électrolyseur haute température ou de piles à combustible haute température comprenait un support formé par l'électrolyte et était ainsi dénommée Cellule à électrolyte support (« ESC » ou « Electrolyte-Supported Cell » en langue anglaise). Une telle cellule à électrolyte support est représentée sur la figure 1 : l'électrode à oxygène O₂ (1) et l'électrode à hydrogène ou à eau (2) sont disposées de part et d'autre de l'électrolyte épais qui constitue le support (3).

La deuxième génération de cellules d'électrolyseur haute température ou de piles à combustible haute température comprenait un support formé par une électrode et était ainsi dénommée Cellule à anode support (« ASC » ou « Anode-Supported Cell » en langue anglaise) en terminologie « SOFC » ou Cellules à cathode support (« CSC » ou « Cathode-Supported Cell » en langue anglaise) en terminologie « EHT ». Une telle cellule à électrode support « ASC » ou « CSC » est représentée sur la figure 2 : l'électrolyte (3) et l'électrode à oxygène (1) sont disposés sur l'électrode épaisse à hydrogène ou à eau (2) qui sert de support.

La troisième génération de cellules d'électrolyseur haute température ou de piles à combustible haute température, à laquelle nous nous intéressons plus particulièrement dans la présente comprend un support métallique poreux et est donc dénommée Cellule à métal support (« MSC »). Une telle cellule à métal support peut se présenter selon deux configurations qui sont respectivement représentées sur les figures 3A et 3B selon que l'électrode qui est placée au contact du support métallique poreux est l'électrode à hydrogène ou à eau (2) (figure 3A) ou bien l'électrode à oxygène (1) (figure 3B). Plus de détails sur ces divers types de « EHT » et de « SOFC » pourront être trouvés dans le document [1].

Les cellules à métal support représentées sur les figures 3A et 3B comportent quatre couches (dont une couche métallique et trois couches en céramique), à savoir :
- le support métallique poreux (4), généralement d'une épaisseur inférieure à 1 mm qui assure:
   ○ le support mécanique de la cellule grâce à ses propriétés mécaniques et à son épaisseur,
   ○ la distribution des gaz jusqu'à l'électrode en vue des réactions électrochimiques grâce à sa porosité,
   ○ le collectage du courant grâce à sa nature métallique conductrice,
- l'électrode H₂/H₂O (2) qui est l'anode pour une SOFC, et la cathode pour un EHT. Grâce au support métallique (4) cette électrode peut être rendue plus mince, avec par exemple une épaisseur inférieure à 50 µm, sa tenue aux cycles redox est ainsi meilleure et son coût est moins élevé ;
- l'électrolyte (3), conducteur ionique pour les ions O²⁻. L'électrolyte (3) peut être rendu plus mince, avec par exemple une épaisseur inférieure à 10 µm, sa température de fonctionnement peut ainsi être abaissée ;
- l'électrode à O₂ (1) qui est la cathode pour une SOFC, et l'anode pour un EHT. Cette électrode (1) peut être rendue plus mince avec par exemple une épaisseur inférieure à 50 µm.

Il est à noter que les épaisseurs données sur la Figure 3B ne sont mentionnées qu'à titre d'exemple.

Dans la présente demande nous nous intéresserons plus particulièrement à une cellule présentant la configuration montrée sur la Figure 3A, dans laquelle la cellule est constituée par une couche électrolytique dense (3), par exemple en zircone stabilisée à l'oxyde d'yttrium (« YSZ »), de scandium, d'ytterbium, ou de gadolinium intercalée entre une cathode poreuse (1), par exemple en manganite de lanthane dopée au strontium (« LSM »), et une anode par exemple en un cermet de Nickel et de zircone stabilisée à l'oxyde d'yttrium (noté « Ni-YSZ ») ou stabilisée à l'oxyde de scandium, d'ytterbium ou de gadolinium.

L'empilement de la cathode (1), de l'électrolyte (3) et de l'anode (2) est déposé sur le support métallique poreux (4).

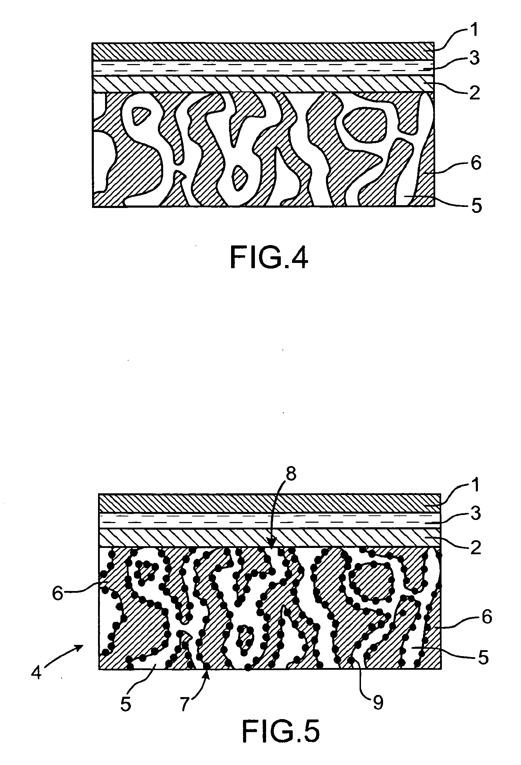

Sur la figure 4, dans laquelle la cellule a la configuration de la figure 3A, le support métallique poreux a été représenté plus en détails en montrant les pores (5) dans la phase métallique (6).

Les principaux avantages de ce type d'architecture de cellule à métal support sont les suivants :
- Elle permet de réduire la température de fonctionnement des SOFCs entre 500°C et 800°C [2, 3]. Les performances électrochimiques de cette architecture de cellule ont été évaluées sous hydrogène. La minceur de l'électrolyte inhérent à ce type d'architecture permet d'atteindre les hautes performances électrochimiques requises pour les applications SOFCs. A titre d'exemple, M.C. Tucker et al. [4] ont publié des performances de cellules obtenues sous hydrogène à 750°C atteignant ~1100 mA.cm⁻² à 0,7 Volt.
- Comme mentionné par de nombreux auteurs, le remplacement du support céramique par un support métallique augmente la robustesse mécanique des cellules. Il a été ainsi démontré que les cellules à métal support sont capables de supporter des cycles thermiques rapides. Y.B. Matus *et al.* [3] ont par exemple cyclé des cellules 50 fois entre 200 et 800°C à 50 °C.min⁻¹. Les observations ont montré que seul le matériau servant à sceller les cellules était endommagé. P. Attryde *et al*. [2] ont, quant à eux, cyclé des cellules soudées dans leur support 500 fois entre 20°C et 600°C à 120°C.min⁻¹. Là encore aucune rupture n'a été mentionnée.
- Ce type d'architecture à métal support semble également être tolérant aux alternances entre une atmosphère oxydante et une atmosphère réductrice dans le compartiment anodique. Ces alternances entre des conditions oxydantes et des conditions réductrices sont encore appelées cycles « redox ». Cette tolérance de l'architecture à métal support vis-à-vis des alternances entre atmosphère oxydante et atmosphère réductrice a récemment été montrée par M.C. Tucker et al. [5]. Ces auteurs ont fait subir cinq cycles «redox», d'une part à une cellule de type métal support et d'autre part à une cellule de type anode support. A chaque cycle, le cermet à base de nickel constituant l'anode a été totalement ré-oxydé. Alors que l'électrolyte mince de l'anode support est rompu dès la première ré-oxydation du nickel, la cellule à métal support continue à fonctionner après les 5 cycles. Une baisse des performances électrochimiques sous hydrogène est tout de même observée, passant de 650mW.cm⁻² à 475mW.cm⁻² (à 0,7 Volts et 700°C).

Le principal inconvénient de l'architecture à métal support réside dans la corrosion lente du poreux métallique même en condition réductrice.

Le carburant idéal du côté de l'anode est l'hydrogène, mais son inflammabilité, et les problèmes liés à son stockage et à sa distribution compliquent grandement son utilisation. En conséquence, il est intéressant d'utiliser des hydrocarbures tels que le gaz naturel, des gaz issus de la biomasse, l'essence, le carburant diesel pour alimenter les piles à combustible à haute température « SOFC ».

L'utilisation de ces hydrocarbures nécessite une étape de reformage pour transformer les hydrocarbures en un mélange contenant de l'hydrogène, du CO et du CO₂ qui est ensuite envoyé du côté anode de la pile à combustible.

Les procédés de reformage externe en amont de la pile à combustible comprennent par exemple l'oxydation catalytique partielle (« Catalytic Partial Oxidation » ou «CPOX» en Anglais) ; le reformage autothermique (« Autothermal reforming » ou « ATR » en anglais) et le reformage à la vapeur ou vaporeformage (« Steam Reforming» ou « SR » en Anglais).

Ces procédés sont des procédés de reformage dits « externes » car ils sont conduits à l'extérieur de la pile à combustible. Ils accroissent donc le coût, le volume et la complexité de l'ensemble de l'installation. En outre, ils entraînent souvent une consommation d'énergie supplémentaire pour convertir les hydrocarbures. Ainsi le vapo-reformage externe est un procédé endothermique qui nécessite une source de chaleur avec une consommation de carburant supplémentaire. Ou bien, l'énergie thermique libérée par la pile à combustible « SOFC » peut être utilisée pour entretenir la réaction de vapo-reformage par l'intermédiaire d'un échangeur de chaleur, là encore très coûteux.

C'est la raison pour laquelle il est apparu très avantageux de réaliser le reformage des hydrocarbures à l'intérieur de la pile à combustible par « reformage interne » ou plus précisément par « Reformage Interne Direct » (« RID »).

Ainsi, le reformage interne direct (« RID ») du méthane ou gaz naturel a été largement étudié.

Un des avantages du « RID » est d'utiliser la chaleur produite par l'oxydation électrochimique de l'hydrogène pour effectuer la réaction endothermique de reformage. Néanmoins, ce processus peut induire des gradients thermiques importants si la cellule ne présente pas une grande conductivité thermique.

La réaction de vapo-reformage s'effectue en surface du solide et requiert l'utilisation d'un catalyseur.

Il a été montré que le nickel [6,7] ou les métaux tels que Pt, Ru, Pd, Rh ou Ir, incorporés dans un support oxyde [8,9] constituent de très bons catalyseurs des réactions de reformage. A titre d'illustration, il a été proposé une méthode de mise en forme d'une anode présentant une grande porosité à laquelle on rajoute un métal précieux pour augmenter la surface catalytique et la réactivité vis-à-vis des réactions de reformage [10].

En outre, les espèces soufrées telles que le H₂S, contenues sous forme de traces ou d'additifs dans le gaz naturel, peuvent s'adsorber sur les sites de reformage et d'électro-oxydation de l'hydrogène. Le sulfure d'hydrogène peut ainsi participer à l'empoisonnement de l'anode [11, 12].

Il a été cependant montré [9] que le platine, lorsqu'il est incorporé dans une Cérine dopée au Gadolinium (« CGO ») présente une grande tolérance vis-à-vis de la teneur en H₂S du gaz combustible.

L'anode d'une cellule SOFC est classiquement constituée par un mélange de Nickel et de Zircone Yttriée, à savoir par un cermet Ni-YSZ, avec généralement 40% vol de Ni et 60% vol d'YSZ, présentant généralement une porosité d'environ 40%.

Pour une telle anode, J. Laurencin et al. [13] ont montré que le « RID » du méthane nécessite un volume réactionnel important pour assurer une production d'hydrogène suffisante dès l'entrée de cellule : le cermet anodique doit ainsi avoir une épaisseur supérieure à 400 µm pour que le « RID » du méthane ne soit pas un processus limitant. Cette étude a en outre montré que le reformage se localise principalement en entrée de cellule.

De manière générale, pour un fonctionnement efficace de la pile, le « RID » du gaz naturel doit s'effectuer avec un système présentant, entre autres, les caractéristiques suivantes :
(1) Volume réactionnel suffisamment important, généralement défini par une épaisseur de la couche réactionnelle supérieure à 400 µm, nécessaire à la réaction de vapo-reformage ;
(2) Utilisation d'un catalyseur de vapo-reformage efficace et résistant au soufre ;
(3) Bonne conductivité thermique de la cellule ;
(4) Résistance de l'anode vis-à-vis de l'empoisonnement au soufre ;
(5) Bonne résistance mécanique de la cellule sous l'effet :
   - des cycles thermiques et d'oxydoréduction du cermet lors des séquences de marche/arrêt du système,
   - d'un gradient de température en fonctionnement sous méthane.

Par ailleurs, au regard du coût important des catalyseurs de reformage qui sont généralement à base de métaux nobles, l'optimisation des quantités de catalyseur mises en jeu est recherchée tout en assurant une conversion suffisante des hydrocarbures, tels que le méthane, en hydrogène.

L'utilisation d'une cellule classique à anode support en cermet Ni-YSZ, éventuellement imprégnée d'un catalyseur de vapo-reformage résistant au soufre, permet de remplir les deux premiers points de ce cahier des charges. Cependant, cette architecture de cellule à anode support présente une faible robustesse mécanique, qui pourrait être limitante sous l'effet d'un gradient de température important. Par ailleurs, comme déjà mentionné, le cermet Ni-YSZ est rapidement empoisonné par le sulfure d'hydrogène et perd ainsi son activité électro-catalytique (oxydation de l'hydrogène). De plus, la cellule à anode support est peu résistante mécaniquement lors des cycles « redox » du cermet [17].

On trouve dans la littérature des brevets et demandes de brevet [14, 15, 16] relatifs à l'utilisation non plus de l'anode mais des interconnecteurs métalliques comme lieux des réactions de reformage. On rappelle que ces interconnecteurs servent de collecteur de courant et assurent la distribution des gaz sur la cellule.

Liu et *al*. [15] proposent par exemple une géométrie innovante des distributeurs de gaz recouverts par le catalyseur de vapo-reformage.

K. Hoshino et *al*. [16] suggèrent d'utiliser des poreux métalliques assurant la diffusion des gaz sur les électrodes. Dans ce concept, la cellule classique à anode ou électrolyte support, et non à métal support, est donc enserrée entre deux poreux métalliques. L'auteur mentionne une taille moyenne des pores très importante, à savoir d'environ 300 µm, qui est indispensable pour assurer une distribution des gaz efficace sur la cellule. Du côté de l'anode, le poreux métallique est partiellement rempli de catalyseur pour assurer la fonction de reformage. Ce type d'architecture présente cependant un certain nombre d'inconvénients :
1) Du côté cathodique, le poreux métallique pourra s'oxyder rapidement sous air à haute température.
2) Cette solution utilise des cellules classiques à anode ou électrolyte support : par conséquent, ce système reste fortement limité par la grande fragilité mécanique inhérente à ces types de cellules.
3) Dans ce type d'approche, la répartition du catalyseur n'est pas optimisée et conduit à l'utilisation d'une grande quantité de métaux nobles et donc à une augmentation des coûts.
4) L'efficacité du collectage du courant est limitée par la très grande porosité du distributeur de gaz.

Il existe donc au regard de ce qui précède un besoin pour une cellule de pile à combustible haute température à reformage interne d'hydrocarbures, qui réponde à toutes les exigences et tous les critères énumérés plus haut en ce qui concerne notamment le volume réactionnel suffisant pour la réaction de reformage, notamment de vapo-reformage ; l'efficacité du catalyseur de reformage ; la résistance au soufre du catalyseur de reformage ; la bonne conductivité thermique de la cellule ; la résistance de l'anode à l'empoisonnement par le soufre ; la bonne résistance mécanique de la cellule sous l'effet des cycles thermiques et d'oxydoréduction du Cermet lors des séquences de marche/arrêt du système, et d'un gradient de température en fonctionnement sous hydrocarbure tel que le méthane ; l'optimisation de la quantité de catalyseur tout en garantissant une conversion suffisante de l'hydrocarbure tel que le méthane en hydrogène.

### EXPOSÉ DE L'INVENTION

Le but de la présente invention est de fournir une cellule de pile à combustible haute température à reformage interne d'hydrocarbures, qui réponde entre autres à l'ensemble des besoins énumérés plus haut, et qui satisfait entre autres à l'ensemble des critères et exigences mentionnés ci-dessus pour une telle cellule de pile à combustible à reformage interne d'hydrocarbures.

Le but de la présente invention est encore de fournir une cellule de pile à combustible haute température à reformage interne d'hydrocarbures qui ne présente pas les inconvénients, défauts, limitations et désavantages des cellules de pile à combustible haute température à reformage interne d'hydrocarbures de l'art antérieur, et qui résolve les problèmes des cellules de l'art antérieur.

Ce but, et d'autres encore, sont atteints conformément à l'invention, par une cellule de pile à combustible haute température « SOFC » à reformage interne d'hydrocarbures, dans lequel ladite cellule est une cellule à métal support comprenant :
- un support métallique poreux comprenant des pores présentant des parois, ledit support poreux comportant une première surface principale et une seconde surface principale ;
- une anode adjacente à ladite seconde surface principale ;
- un électrolyte adjacent à ladite anode ; et
- une cathode adjacente audit électrolyte ;
un catalyseur de reformage d'au moins un hydrocarbure étant déposé sur les parois des pores du support métallique poreux, et la quantité, concentration en catalyseur dans le support métallique poreux diminuant dans une direction de la première surface principale dans le même sens qu'un sens d'écoulement d'un courant d'alimentation en hydrocarbure, le long de ladite première surface principale à l'extérieur de la cellule.

La cellule de pile à combustible selon l'invention n'a jamais été décrite dans l'art antérieur tel que représenté notamment par les documents cités plus haut.

En particulier, l'incorporation d'un catalyseur dans le support métallique poreux d'une cellule de pile à combustible à métal support n'est ni mentionnée ni suggérée dans l'art antérieur.

On peut dire que le principe de base de la présente invention est de fonctionnaliser le substrat métallique poreux d'une cellule de pile à combustible à métal support pour réaliser le reformage interne direct d'un hydrocarbure, tel que le méthane.

Selon l'invention, on utilise de manière surprenante le volume du support métallique poreux d'une cellule de pile à combustible, préalablement imprégné d'un catalyseur de reformage afin d'assurer une conversion non limitante d'un hydrocarbure tel que le méthane en hydrogène.

La cellule de pile à combustible selon l'invention ne présente pas les inconvénients, défauts et désavantages des cellules de pile à combustible haute température à reformage interne d'hydrocarbures de l'art antérieur, remplit tous les critères et répond à toutes les exigences énumérées plus haut pour ces cellules, et apporte une solution à tous les problèmes des cellules de pile à combustible de l'art antérieur.

Parmi les propriétés avantageuses que possède la cellule de pile à combustible selon l'invention on peut notamment citer les suivantes :
- La grande robustesse mécanique des cellules à métal support est mise à profit de manière extrêmement avantageuse par les cellules selon l'invention dans le cadre de l'application visée, à savoir le reformage interne direct des hydrocarbures ;
- Dans la cellule selon l'invention, le volume du support métallique est utilisé comme lieu de reformage des hydrocarbures, par exemple du méthane, dissociant ainsi, au contraire des cellules de l'art antérieur, la fonction d'électrode de celle de reformeur. La grande conductivité thermique du métal assure le transport de chaleur au sein de la cellule, nécessaire au reformage des hydrocarbures, par exemple du méthane. Elle permettra de limiter les gradients de température en fonctionnement ;
- L'imprégnation du support poreux par un catalyseur, tel qu'un catalyseur Pt/CGO permet d'obtenir l'efficacité nécessaire pour obtenir un taux de conversion important du méthane.

Généralement, de préférence il y a un seul courant d'alimentation avec de préférence un seul sens d'écoulement.

Avantageusement, la première surface principale et la seconde surface principale peuvent être des surfaces planes et parallèles. Et le substrat est donc alors un substrat planaire.

Avantageusement, la première surface principale peut être une surface inférieure et la seconde surface principale peut être une surface supérieure, et l'anode, l'électrolyte et la cathode sont successivement empilés sur la seconde surface principale du support métallique poreux.

Avantageusement, la porosité du support métallique poreux peut être de 20 à 70%, par exemple de 40%.

Avantageusement, le diamètre moyen des pores du support métallique poreux peut être de 1 à 50 µm, de préférence de 5 à 15 µm, par exemple de 6 µm.

Avantageusement, l'épaisseur du support métallique poreux, définie par la distance entre la première surface principale et la seconde surface principale du support métallique poreux peut être de 200 à 1000 µm, de préférence de 400 à 500 µm.

Avantageusement, si le support métallique poreux présente une porosité, et/ou un rayon moyen des pores, et/ou une épaisseur dans les plages définies plus haut, et si de préférence la porosité et le rayon moyen des pores et l'épaisseur se situent tous trois simultanément dans ces plages, alors la quantité de catalyseur utilisée est optimisée, l'utilisation de métaux nobles coûteux est limitée, et les dimensions du support sont généralement suffisantes pour que soit réalisé le « RID » d'un hydrocarbure tel que le méthane.

Avantageusement, la quantité de catalyseur peut être de 0,1 à 5 % en masse par rapport à la masse du support métallique poreux.

Avantageusement, le catalyseur peut être un catalyseur de vapo-reformage.

Avantageusement, le catalyseur est choisi parmi les métaux de transition tels que le nickel, le cobalt, le cuivre, le chrome, et le fer ; les métaux nobles ou précieux tels que le ruthénium, le platine, le rhodium, l'iridium, l'argent et le palladium ; et leurs mélanges.

Le catalyseur peut être supporté, imprégné sur un support solide.

Avantageusement, le support solide du catalyseur peut être choisi parmi les oxydes de métaux, éventuellement dopés, tels que l'alumine ; la chromite de lanthane dopée au strontium ; et la cérine, éventuellement dopée par du gadolinium, du samarium ou de l'yttrium.

Un catalyseur préféré est un métal noble tel que le platine supporté par de la cérine dopée au gadolinium (« CGO ») de préférence de formule Ce_{0,8}Gd_{0,2}O_{1,9}.

Avantageusement, le catalyseur notamment supporté sur son support tel que le catalyseur Pt/cérine dopée Gd par exemple, peut se présenter sous la forme de particules.

Les particules, de préférence sphériques, peuvent avoir une taille, par exemple un diamètre de 20 nm à 1 µm.

Grâce à son support oxyde (en « CGO » par exemple) le catalyseur (Pt par exemple) ne sera pas affecté par la corrosion lente en surface de la phase métallique du support.

Par ailleurs, il a été constaté que ces particules de Pt/CGO ne perdent par leur activité catalytique en présence de sulfure d'hydrogène.

En outre ces particules permettent, à l'instar de la couche poreuse de nickel, de piéger le H₂S.

Le catalyseur, par exemple sous la forme de particules et notamment d'une poudre, peut remplir au moins partiellement les pores du support métallique poreux et peut être déposé sur les parois des pores du support métallique poreux.

Avantageusement, la quantité, concentration en catalyseur diminue de manière continue ou par décréments dans le support métallique poreux depuis une première extrémité de celui-ci où se situe une arrivée pour le courant d'alimentation en ledit hydrocarbure, jusqu'à une seconde extrémité de celui-ci où se situe une sortie pour l'évacuation d'un courant d'au moins un produit du reformage.

Ainsi le support métallique poreux peut-il être divisé en n zones successives depuis ladite première extrémité jusqu'à ladite seconde extrémité, la quantité, concentration du catalyseur étant chaque fois diminuée, de préférence divisée par un nombre entier par exemple 2 ou 3, d'une zone à la suivante.

L'homme du métier pourra adapter le nombre de zones, défini par la valeur de n, en fonction des besoins.

n est un nombre entier qui peut aller par exemple de 2 à 10. En pratique pour n >3, la nième zone peut éventuellement être dépourvue de catalyseur, sans que les performances de la cellule n'en soient affectées.

Par exemple, le support métallique poreux peut être divisé en une première, une deuxième et une troisième zones successives, de préférence d'égal volume depuis ladite première extrémité jusqu'à ladite seconde extrémité, la quantité de catalyseur dans ladite deuxième zone, respectivement troisième zone étant la moitié de la quantité de catalyseur dans ladite première zone, respectivement deuxième zone.

En effet, il a été montré que le reformage doit être important dès l'entrée de la cellule car on fournit ainsi une quantité d'hydrogène suffisante pour une utilisation efficace de la surface complète de la cellule. Par conséquent, il est avantageux de fonctionnaliser le support métallique poreux par un gradient de catalyseur dans le sens longitudinal c'est-à-dire généralement dans la direction de la première surface principale et/ou de la seconde surface principale dans le sens d'écoulement d'un courant d'alimentation en combustible, notamment en gaz combustible, le long de la cellule, à l'extérieur de celle-ci.

Un tel gradient de catalyseur, avantageusement combiné avec une épaisseur optimisée du support métallique poreux se situant de préférence dans la plage mentionnée plus haut, permet également d'optimiser et de réduire au minimum nécessaire la quantité de catalyseur, et notamment de métaux nobles mise en oeuvre.

Avantageusement, la porosité du support métallique poreux peut diminuer depuis la première surface principale jusqu'à la seconde surface principale, et le support peut comprendre alors depuis la première surface principale jusqu'à la seconde surface principale au moins une couche de forte porosité au contact de la première surface principale et une couche de faible porosité au contact de la seconde surface principale.

Avantageusement, la cellule de pile à combustible selon l'invention peut comprendre en outre une couche poreuse en un métal choisi parmi le nickel, le cuivre, le manganèse, le cobalt, le fer et leurs alliages, déposée sur la première surface principale.

De préférence, cette couche poreuse est en nickel, de préférence encore en nickel pur.

Avantageusement, cette couche de nickel a une épaisseur d'environ 10 à 20 µm.

Cette couche de métal, de préférence de nickel, permet de piéger le H₂S et de protéger l'anode par exemple en cermet Ni-YSZ contre l'empoisonnement par le soufre.

Cette couche de métal, de préférence de nickel, agit également comme une couche protectrice lors de la ré-oxydation de l'anode. En effet en agissant comme un piège à oxygène à l'entrée de la cellule, elle limite l'oxydation de l'anode par exemple en cermet Ni-YSZ.

En d'autres termes, cette couche permet d'augmenter la teneur en soufre qui peut être acceptée par la pile et d'améliorer la tenue de la pile aux cyclages « rédox ».

Avantageusement, le support métallique poreux peut être en un métal ou alliage choisi parmi le fer, les alliages à base de fer, le chrome, les alliages à base de chrome, les alliages fer-chrome, les aciers inoxydables, le nickel, les alliages à base de nickel, les alliages nickel-chrome, les alliages contenant du cobalt, les alliages contenant du manganèse, l'aluminium, et les alliages contenant de l'aluminium.

Avantageusement, l'anode peut être en un cermet de nickel et de zircone stabilisée à l'oxyde d'yttrium (« YSZ ») ou en un cermet de nickel et de cérine stabilisée, dopée à l'oxyde de scandium, d'ytterbium ou de gadolinium. Par exemple, l'oxyde peut être en un cermet de nickel et de zircone stabilisée à 8% molaire d'oxyde d'yttrium (« Ni-8YSZ »), ou en un cermet de nickel et de cérine dopée au gadolinium (CGO).

Le cermet en Ni-Cérine dopée à l'oxyde de gadolinium (Ni-CGO), qui est plus tolérant que le cermet Ni-YSZ vis-à-vis des composés soufrés tels que H₂S, améliore ainsi la tenue de l'anode vis-à-vis du soufre, et l'améliore encore plus s'il est prévu en outre une couche poreuse de métal, de préférence de nickel, sur la seconde surface principale du support métallique poreux.

### BRÈVE DESCRIPTION DES DESSINS

- La figure 1 est une vue schématique en coupe verticale d'une cellule de « EHT » ou de « SOFC » à électrolyte support (« ESC ») ;
- la figure 2 est une vue schématique en coupe verticale d'une cellule de « EHT » ou de « SOFC » à électrode support (anode support : « ASC » en dénomination « SOFC » ou cathode support : « CSC » en dénomination « EHT ») ;
- la figure 3A est une vue schématique en coupe verticale d'une cellule de « EHT » ou de « SOFC » à métal support (« MSC ») dans une première configuration dans laquelle l'électrode qui est placée au contact du support métallique poreux est l'électrode à hydrogène ou à eau ;

- la figure 3B est une vue schématique en coupe verticale d'une cellule de « EHT » ou de « SOFC » à métal support (« MSC ») dans une seconde configuration dans laquelle l'électrode qui est placée au contact du support métallique poreux est l'électrode à oxygène ;
- la figure 4 est une vue schématique en coupe verticale d'une cellule de « SOFC » à métal support ayant la configuration de la Figure 3A, comprenant un support métallique poreux, sur laquelle les pores de ce support ont été représentés ;
- la figure 5 est une vue schématique en coupe verticale d'une cellule de « SOFC » à métal support selon l'invention dans laquelle le support métallique poreux est infiltré par des particules de catalyseur, telles que des particules d'oxyde céramique imprégné par un métal noble, par exemple Pt/CGO ;
- la figure 6 est une vue schématique en coupe verticale d'une cellule de « SOFC » à métal support selon l'invention dans laquelle le support métallique poreux est infiltré par des particules de catalyseur, et dans laquelle, en outre, une couche poreuse de Nickel est déposée sur la surface inférieure du support métallique poreux ;
- la figure 7 est une vue schématique en coupe verticale d'une cellule de « SOFC » à métal support selon l'invention dans laquelle le support métallique poreux est infiltré par des particules de catalyseur, dans laquelle, en outre, une couche poreuse de Nickel est déposée sur la surface inférieure du support métallique poreux. Le catalyseur est réparti dans le support métallique suivant un gradient de concentration longitudinal décroissant depuis l'entrée jusqu'à la sortie des gaz ;
- la figure 8 est un organigramme qui montre les différents procédés d'élaboration d'un support métallique poreux fonctionnalisé d'une cellule de pile à combustible selon l'invention.

### EXPOSÉ DÉTAILLÉ DE MODES DE RÉALISATION PARTICULIERS

La description détaillée qui suit est plutôt faite, par commodité, en référence à un procédé de préparation, de fabrication de la cellule selon l'invention.

Précisons tout d'abord que le terme poreux tel qu'il est utilisé dans la présente en relation avec un matériau tel qu'un métal ou un alliage métallique, signifie que ce matériau contient des pores ou vides.

En conséquence, la densité de ce matériau poreux est inférieure à la densité théorique du matériau non poreux.

Les pores peuvent être reliés ou isolés mais dans le substrat métallique poreux selon l'invention la majorité des pores sont reliés, en communication. On parle alors de porosité ouverte.

Généralement dans le support métallique poreux de l'invention les pores sont des pores percolants qui relient la première surface principale (généralement la surface inférieure) à la seconde surface principale (généralement la surface supérieure).

Au sens de l'invention, un support est généralement considéré comme poreux lorsque sa densité est au plus d'environ 95% de sa densité théorique.

En outre, dans la présente, on emploie indifféremment les termes substrat et support, le terme support se rapportant plutôt au substrat poreux intégré ou allant être intégré dans une SOFC.

La fabrication, la préparation d'une cellule de pile à combustible selon l'invention comprennent une première étape au cours de laquelle on prépare, fabrique, élabore, le support métallique poreux.

Le substrat, support métallique poreux, peut avoir, une section principale en forme de polygone, par exemple une section carrée ou rectangulaire ou bien une section circulaire.

Le substrat est généralement un substrat plan, planaire c'est-à-dire que les première et seconde surfaces mentionnées ci-dessus sont généralement planes, de préférence horizontales et parallèles et ont par exemple une des formes citées ci-dessus : polygone, rectangle, carré ou cercle, et que, en outre, l'épaisseur du substrat est faible par rapport aux dimensions desdites première et seconde surfaces. De préférence encore, lesdites première et seconde surfaces sont des surfaces horizontales et la première surface principale peut alors être qualifiée de surface inférieure tandis que la seconde surface principale peut alors être qualifiée de surface supérieure.

Le substrat peut notamment avoir la forme d'un disque, par exemple d'une épaisseur de 200 µm à 2 mm et d'un diamètre de 20 mm à 500 mm ou la forme d'un parallélépipède rectangle ou encore la forme d'un substrat à section carrée.

Le substrat peut être un substrat de grande taille, à savoir par exemple de 50 mm à 300 mm de diamètre ou de côté, ou un substrat de petite taille par exemple de 10 mm à 50 mm.

Ce support métallique poreux peut être fabriqué par pressage, notamment uniaxial, puis frittage ou bien par coulage de bandes, ces bandes étant ensuite assemblées par thermopressage ou laminage, puis frittées.

La fabrication d'un support métallique poreux par pressage uniaxial est notamment décrite dans les documents [18] et [19] auxquels on pourra se reporter. Le métal ou alliage sous forme de poudre est éventuellement mélangé avec un agent porogène et un liant organique, le mélange est introduit dans un moule de forme adéquate, puis il est mis en forme par pressage uniaxial.

Le moule a une forme et une taille adaptées à la forme et à la taille du substrat que l'on souhaite préparer.

Le moule est généralement en un matériau métallique.

Les poudres métalliques introduites dans le moule peuvent être choisies parmi les poudres de métaux et d'alliages métalliques suivants : fer, alliages à base de fer, chrome, alliages à base de chrome, alliages fer-chrome, aciers inoxydables, nickel, alliages à base de nickel, alliages nickel-chrome, alliages contenant du cobalt, alliages contenant du manganèse, alliages contenant de l'aluminium.

Les poudres utilisées dans le procédé selon l'invention peuvent être des poudres du commerce ou bien elles peuvent être préparées par broyage ou atomisation de morceaux massifs de métaux ou d'alliages.

Les poudres de métaux ou d'alliages utilisées dans le procédé selon l'invention ont généralement une granulométrie de 1 µm à 500 µm, de préférence de 1 µm à 100 µm.

Un gradient de porosité peut être obtenu dans le support métallique poreux en faisant varier la quantité et/ou la distribution granulométrique du porogène et/ou du métal.

Afin d'obtenir un gradient de porosité du support métallique poreux selon l'invention, on peut déposer successivement dans le moule au moins deux couches de poudre, qui présentent des granulométries croissantes, respectivement décroissantes.

En effet, plus la granulométrie de la poudre est importante, plus la porosité du matériau pressé puis fritté issu de cette poudre sera élevée.

Ainsi, on pourra commencer par déposer dans le moule une première couche ou inférieure constituée par une poudre de forte granulométrie, à savoir par exemple de 50 µm à 500 µm, destinée à former dans le support métallique poreux final, et après compression/pressage puis frittage, une couche inférieure de forte porosité, à savoir d'une porosité généralement de 25% à 65%, avantageusement de 30% à 60%. Dans le support métallique poreux final, cette couche inférieure de forte porosité permet de faciliter l'acheminement des gaz à travers le poreux.

L'épaisseur de cette couche inférieure constituée par une poudre de forte granulométrie est telle qu'elle donne dans le poreux final une couche de forte porosité d'une épaisseur généralement de 100 µm à 2 mm.

Au-dessus de cette couche inférieure constituée par une poudre de forte granulométrie, on peut déposer une couche constituée par une poudre de faible granulométrie, à savoir par exemple de 1 µm à 50 µm, destinée à former dans le support métallique poreux final, et après compression et frittage, une couche supérieure de faible porosité, à savoir d'une porosité généralement de 10% à 40%, avantageusement de 10% à 30%. Dans le support métallique poreux final, cette couche supérieure de faible porosité permet de faciliter l'accrochage de la couche céramique constituant l'électrode.

L'épaisseur de cette couche supérieure constituée par une poudre de faible granulométrie est telle qu'elle donne dans le poreux final une couche de faible porosité d'une épaisseur généralement inférieure à 200 µm, et de préférence inférieure à 100 µm.

Au lieu de déposer d'abord une couche inférieure constituée par une poudre de forte granulométrie puis une couche supérieure constituée par une poudre de faible granulométrie, on peut bien sûr, à l'inverse, commencer par déposer la couche constituée par une poudre de granulométrie faible puis déposer la couche constituée par une poudre de granulométrie élevée.

Une ou plusieurs couche(s) intermédiaire(s) constituée(s) par des poudres présentant une granulométrie intermédiaire entre la granulométrie de la poudre constituant la couche inférieure, respectivement supérieure de forte granulométrie, et la granulométrie de la poudre constituant la couche supérieure, respectivement inférieure de faible granulométrie peut (peuvent) être déposée(s) entre la couche inférieure et la couche supérieure.

Ces couches intermédiaires peuvent être au nombre de 1 à 8, par exemple de 1 à 5, notamment 2, 3 ou 4. La granulométrie des poudres qui constituent ces couches intermédiaires est avantageusement choisie pour assurer une évolution de la porosité plus continue dans le support métallique poreux final. En d'autres termes, ces couches intermédiaires sont constituées par des poudres dont la granulométrie décroît depuis la couche la plus proche de la couche constituée par une poudre de forte granulométrie jusqu'à la couche la plus proche de la couche constituée par une poudre de faible granulométrie.

Ainsi, on pourra prévoir 4 couches intermédiaires constituées par des poudres ayant respectivement une granulométrie de 300 à 400, 200 à 300, 100 à 200, 50 à 100 µm entre une couche de forte granulométrie ayant généralement une granulométrie de 400 à 500 µm et une couche de faible granulométrie ayant généralement une granulométrie de 1 à 50 µm.

La porosité et l'épaisseur exactes des couches dans le support métallique poreux final sont définies par la granulométrie des poudres ainsi que par la force appliquée lors de l'étape de pressage décrite plus bas.

En outre, toutes les couches de poudres y compris les couches intermédiaires éventuelles peuvent être constituées par un même alliage ou métal ou bien une ou plusieurs couches de poudres peuvent être constituées par un métal ou alliage différent des autres couches.

Une fois que les couches de poudres ont été disposées dans le moule, on procède ensuite à une étape de mise en forme de ces poudres par pressage, compression. Préalablement au remplissage du moule, il est éventuellement possible d'incorporer un liant, tel qu'un liant organique de type PVA, et/ou un porogène de type amidon. Ces composés peuvent être ajoutés à la poudre métallique sous la forme d'une suspension ou d'une poudre (les deux présentant une teneur de 1 à 20%, de préférence de 5% en poids). L'incorporation du liant permet d'obtenir une tenue mécanique suffisante des pièces pressées à cru. L'incorporation du porogène permet d'atteindre la porosité finale du matériau.

On dépose, en les versant tout simplement dans le moule, les différentes couches, et le pressage et le frittage sont généralement réalisés, d'un seul tenant, sur l'ensemble des couches. Il est aussi possible de réaliser le pressage et le frittage couche par couche.

De préférence, ce pressage, cette compression, est réalisé(e) à l'aide d'une presse uniaxiale.

Lors du pressage, on applique généralement une pression comprise entre 10 et 700 MPa, de préférence de 100 MPa pour obtenir ainsi une porosité de 70% à 20%, et de préférence de 40% à 60% à cru.

A l'issue de l'étape de mise en forme par pressage, compression, on obtient un support métallique poreux « cru », « green » avec une porosité globale, moyenne de 70% à 20%, de préférence de 40% à 60%. On sépare alors le substrat, support métallique poreux « cru » du moule.

On peut aussi préparer le substrat, support métallique poreux « cru » « green » par coulage en bande puis assemblage par thermopressage ou laminage [20] [21].

Le métal sous forme de poudre est mis en suspension dans un solvant organique, par exemple un mélange azéotropique de Méthyl Ethyl Cétone (MEK) et d'éthanol, à l'aide d'un dispersant, tel que l'acide oléique par exemple, adapté. Des liants, et/ou dispersants et/ou plastifiants tels que le polyéthylène glycol, ou le dibutylphtalate sont introduits, ainsi qu'un porogène tel qu'une cire, un amidon, ou un polyéthylène.

La suspension est coulée sous la forme d'une bande au moyen d'un sabot de coulage.

Après séchage, la bande est découpée et peut être assemblée par thermopressage ou laminage à d'autres bandes comportant éventuellement des quantités et/ou des distributions granulométriques différentes de porogène et/ou de métal permettant ainsi d'obtenir un gradient de porosité après frittage.

Le thermopressage permet sous l'action couplée de la température et de la pression de ramollir les liants et plastifiants contenus dans les bandes et d'assurer une soudure entre elles.

L'étape suivante du procédé selon l'invention consiste à fritter ce support métallique poreux « cru », « green ».

Le frittage de ce support métallique poreux « cru » s'effectue préférentiellement sous une atmosphère contrôlée, à savoir une atmosphère généralement définie par une pression partielle d'oxygène très faible, par exemple inférieure à 10⁻²⁰ atm, afin de limiter l'oxydation de ce poreux. Cette atmosphère est généralement constituée par de l'argon ou de l'azote en présence d'un réducteur tel que l'hydrogène, ou bien par de l'hydrogène pur.

Le frittage est généralement réalisé à une température comprise entre la température minimum de début de frittage et la température de densification totale du matériau constituant le support poreux « cru ». Cette température est généralement de 600°C à 1600°C et elle est plus précisément de 800°C à 1400°C, notamment pour l'acier 1.4509.

De préférence, la température de frittage correspond à 85% de la température de densification totale du matériau, à savoir par exemple 1200°C.

La température de frittage peut être maintenue (palier de frittage) pendant une durée de 0 à 8 heures, par exemple de 3 heures.

Le choix de la température de densification-frittage ainsi que la durée du palier de frittage sera conditionné par la porosité finale moyenne, globale, souhaitée du matériau et de préférence on choisira une température de frittage de 1200°C que l'on maintiendra pendant une durée de 3 heures.

On a vu que l'on préfère presser et fritter toutes les couches d'un seul tenant mais lorsque chaque couche est constituée par un matériau différent et/ou a une granulométrie différente, chacune de ces couches présente également des températures et/ou durées de frittage et/ou paliers de frittage différents. L'homme du métier pourra alors facilement déterminer les températures, durées, et paliers de frittage pour l'ensemble des couches au moyen de quelques essais préalables.

On procède ensuite, dans l'étape suivante du procédé de préparation d'une cellule de pile à combustible selon l'invention, à la fonctionnalisation du support poreux métallique pour qu'il remplisse son rôle de Reformage Interne Direct.

Pour cela, on peut, éventuellement, munir le support métallique poreux d'une « barrière de protection » de l'anode vis-à-vis des composés soufrés tels que le sulfure d'hydrogène (résistance au soufre) et de l'oxygène (résistance à l'oxygène).

Afin de protéger l'anode des composés soufrés tels que le sulfure d'hydrogène contenu dans le gaz d'alimentation, ou de l'oxygène lors d'une mise sous air de l'anode, une couche de métal poreuse, par exemple une couche de nickel, de cuivre, de manganèse, de cobalt, de fer, ou d'un de leurs alliages peut être associée au support métallique poreux.

Pour ce faire, cette couche peut être directement réalisée lors de la fabrication du support métallique par les deux procédés évoqués précédemment. Il suffit dans le cas du pressage de disposer comme première couche un mélange composé de poudre de métal, par exemple de nickel, de porogènes et de liants, puis d'ajouter les couches constitutives du support métallique poreux présentant ou non un gradient de porosités.

Dans le cas du coulage de bandes assemblées par thermopressage ou laminage, il suffit de disposer une bande supplémentaire contenant un métal tel que le nickel et des porogènes avant l'assemblage. Le frittage sous atmosphère neutre viendra consolider mécaniquement la structure complète.

La fonctionnalisation comprend dans tous les cas une étape consistant à munir le support métallique poreux d'une fonction catalytique pour le Reformage Interne Direct « RID ». Cette fonction catalytique est assurée par un catalyseur, tel qu'un catalyseur de reformage à la vapeur ou vaporeformage réparti dans le support métallique poreux. Ce catalyseur peut être supporté, imprégné sur un support solide. Un exemple non limitatif d'un tel catalyseur est un catalyseur de vaporeformage tel qu'un métal noble imprégnant de la cérine gadoliniée. La description qui suit de la préparation du support métallique poreux pourvu d'un catalyseur est plutôt effectuée en considérant que ce catalyseur est de la cérine dopée au gadolinium imprégnée par un métal noble mais l'homme du métier pourra facilement transposer et adapter ce procédé à d'autres catalyseurs qu'ils soient ou non supportés.

La cérine dopée au gadolinium (« CGO ») imprégnée par un métal noble tel que le platine, est connue pour assurer la catalyse des réactions de reformage et pour présenter une résistance accrue au sulfure d'hydrogène.

Un ajout de cérine dopée imprégnée par un métal noble (CGO/métal-noble) au support métallique poreux peut être réalisé de différentes manières :
- on peut introduire une poudre de CGO/métal noble dans les formulations de pressage ou de coulage en bande. On peut ainsi éventuellement faire varier la concentration en catalyseur dans le volume du support poreux.
- on peut introduire le catalyseur dans le support métallique sous la forme d'une solution ou d'uns suspension contenant du dit catalyseur [22, 23], par imprégnations successives du support métallique poreux préalablement fritté.
- on peut alors éventuellement réaliser un gradient de concentration en CGO/métal noble en effectuant un nombre d'imprégnations différent selon les zones à enrichir ou à appauvrir.

Un traitement thermique ultérieur vient convertir le précurseur organométallique en métal tel que le platine.

Une fois le support métallique poreux comprenant un catalyseur préparé, on termine la fabrication de la cellule de pile à combustible selon l'invention en déposant sur le support métallique poreux initialement élaboré puis fritté comme on l'a décrit plus haut, l'anode (2) puis l'électrolyte (3), puis la cathode (1).

Dans le cadre d'une cellule métal support, l'électrolyte est généralement une couche d'une épaisseur de 5 à 30 µm, de préférence de 5 à 20 µm, par exemple de l'ordre de 10 µm.

L'anode et la cathode sont généralement des couches d'une épaisseur comprise entre 30 et 60 µm, par exemple de l'ordre de 40 µm.

Les couches de la cellule sont alors généralement frittées successivement ou en une seule étape selon la nature des matériaux et leur température de frittage respective.

Les figures 5, 6 et 7 présentent des cellules de pile à combustible selon l'invention qui comprennent un support métallique poreux (4), avec des pores (5) définis dans une matrice métallique (6).

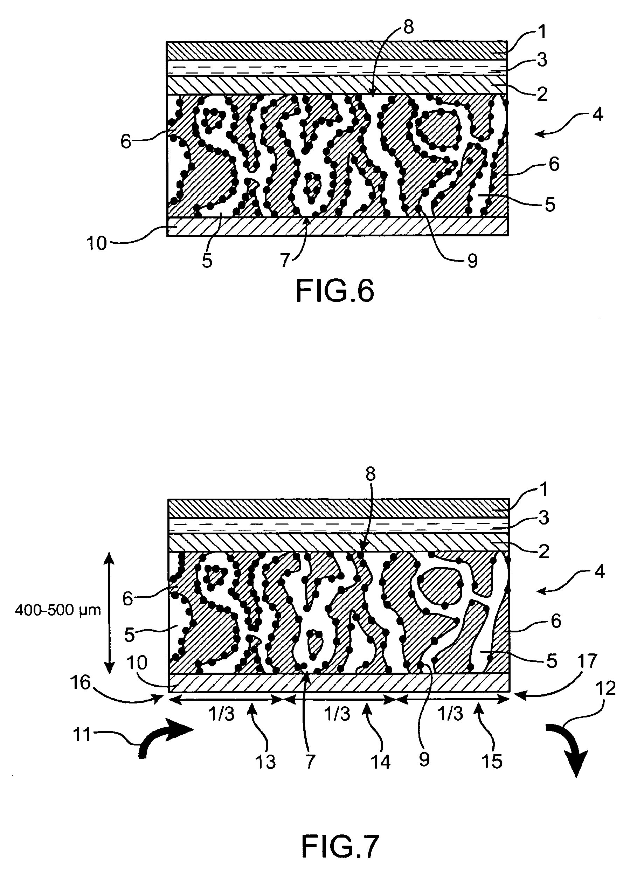

Le support représenté sur la figure 5 est un support généralement plan avec une première surface principale plane (7) et une seconde surface principale plane (8), ces deux surfaces (7, 8) étant parallèles. Ces deux surfaces (7, 8) sont généralement horizontales, la première surface principale (7) étant alors une surface inférieure et la seconde surface principale (8) étant alors une surface supérieure, de préférence la distance entre les deux surfaces principales (7, 8) est de 400 à 500 µm comme montré à titre d'exemple sur la figure 7.

Ce support poreux métallique est infiltré par une poudre constituée par des particules de catalyseur (9), de préférence un catalyseur Pt/Ce_{0,8}Gd_{0,20}O_{1,9}, qui sont généralement déposées sur les parois des pores (5). Sur ce support poreux sont empilés de manière classique une couche d'anode (2) par exemple en cermet Ni-8YSZ, et de préférence en cermet Ni-CGO, une couche d'électrolyte (3) de préférence à base de zircone stabilisée, et une couche de cathode (1) de préférence en LSM.

Sur la figure 6, la cellule comprend en outre une couche de métal, par exemple de nickel pur poreuse (10) par exemple d'une épaisseur de 10 à 20 µm sur la surface inférieure (7) du support métallique poreux.

Sur la figure 7, la cellule comprend une couche de nickel poreuse (10), et en outre le catalyseur est réparti suivant un gradient longitudinal dans le support métallique poreux depuis l'arrivée pour l'alimentation en hydrocarbure (11) jusqu'à la sortie pour l'évacuation des produits de reformage de ces hydrocarbures (12), en d'autres termes depuis l'entrée (11) jusqu'à la sortie (12) des gaz.

Entre ladite arrivée (11) et ladite sortie (12), l'écoulement, courant d'alimentation d'hydrocarbure circule dans un canal à l'extérieur de la cellule et le long de la première surface principale (7), qui est sur la figure la surface inférieure du support poreux (4). Ce courant d'alimentation s'enrichit progressivement en produit de reformage avant d'être évacué par la sortie (12) de ce courant.

Par gradient longitudinal, on entend que ce gradient est généralement établi selon la plus grande dimension du support métallique poreux.

Cette entrée de gaz (11) est généralement située à une première extrémité (16) du support métallique poreux tandis que la sortie des gaz (12) est généralement située à une autre ou seconde extrémité (17) du support métallique poreux.

Sur la figure 7, le support métallique poreux est ainsi divisé en trois zones successives (13, 14, 15) de volumes sensiblement égaux dans le sens de sa plus grande dimension, à savoir de sa longueur (dans le cas d'un support rectangulaire) ou de son rayon (dans le cas d'un support circulaire).

La cellule est divisée en 3 zones depuis l'entrée des gaz en direction de l'évacuation (par exemple de l'un des bords ou extrémité (16) de la cellule jusqu'à l'autre des bords ou extrémité (17) dans le cas d'une cellule rectangulaire). Dans les deuxième et troisième zones (14, 15) la quantité de catalyseur est divisée par deux par rapport à la zone précédente.

La cellule représentée sur la figure 7, dans le cas ou l'anode (2) est en un cermet Ni-CGO peut être considérée comme une cellule donnant généralement les meilleurs résultats pour une meilleure tenue aux cycles « rédox », une plus grande résistance au soufre et une optimisation de la quantité de catalyseurs utilisés.

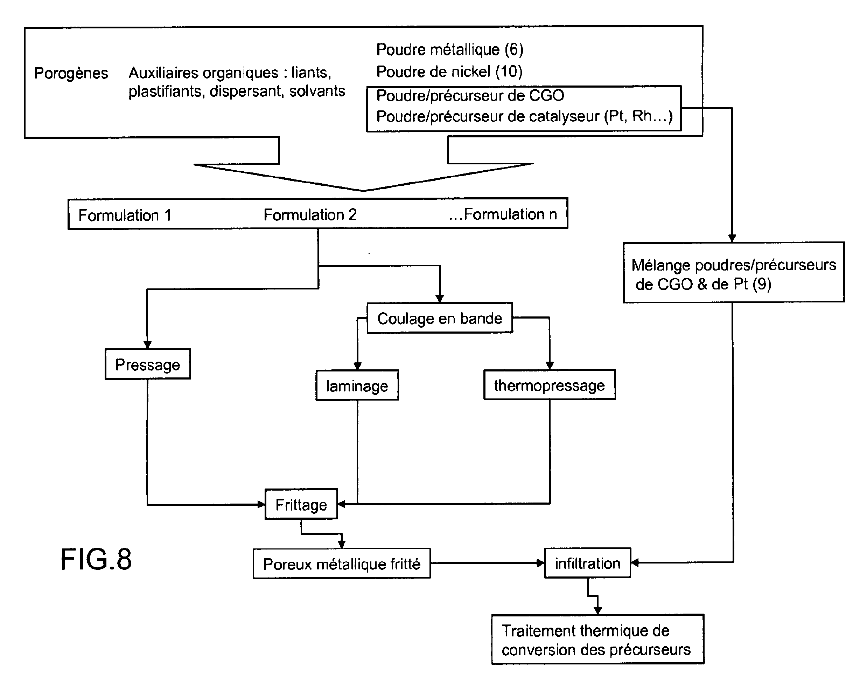

La Figure 8 présente un organigramme décrivant les différentes voies d'élaboration du support métallique poreux « fonctionnalisé ».

Il est important de noter que l'organigramme de la Figure 8 ne constitue qu'un mode de réalisation, donné à titre d'exemple, du procédé de fabrication de la cellule présentant l'architecture selon l'invention.

D'autres modes de réalisation de ce procédé sont possibles.

Par exemple, on pourrait envisager de fritter le support poreux métallique et les couches de la cellule directement ensemble en une seule étape. Dans ce mode de réalisation, le métal support pourrait être ensuite directement imprégné par le catalyseur, tel qu'un catalyseur de vapo-reformage (CGO/Pt par exemple).

La « SOFC » comprenant une cellule selon l'invention trouve en particulier son application dans le domaine de la micro-cogénération. On pourra par exemple utiliser cette architecture de cellule dans une pile alimentée par du gaz naturel de ville et intégrée dans une chaudière individuelle pour une production simultanée d'électricité et de chaleur.

Une « SOFC » comprenant une cellule selon l'invention peut également fonctionner en étant alimentée par du biogaz, issu par exemple du traitement des déchets de décharge ou de stations d'épuration, ou par du gaz issu du traitement d'effluents divers, par exemples des effluents papetiers ou laitiers.

### RÉFÉRENCES

[1] N. Christiansen et al., Solid Oxide Fuel Cell Research and Development at Topsoe Fuel Cell A/S and Risø/DTU, 8th European Fuel Cell Forum 2008, Lucerne, Suisse, 30 juin au 4 juillet 2008, article B0201.
[2] P. Attryde, A. Baker, S. Baron, A. Blake, N.P. Brandon, D. Corcoran, D. Cumming, A. Duckett, K. El-Koury, D. Haigh, M. Harrington, C. Kidd, R. Leah, G. Lewis, Stacks and system based around metal supported SOFCs operating at 500-600°C, in: Proceedings of SOFC IX, the Electrochemical Soc., Quebec, Canada (2005), vol. 1, pp. 113-122.
[3] Y.B. Matus, L.C. De Jonghe, C.P. Jacobson, S.J. Visco, Metal-supported solid oxide fuel cell membranes for rapid thermal cycling, Solid State Ionics, 176, 2005, pp. 443-449.
[4] M.C. Tucker, G.Y. Lau, C.P. Jacobson, L.C. De Jonghe, S.J. Visco, Metal supported SOFCs, in: Proceedings of SOFC X, ECS transaction, Nara, Japon (2007), vol. 7(1), pp. 279-284.
[5] M.C. Tucker, G.Y. Lau, C.P. Jacobson, L.C. De Jonghe, S.J. Visco, Stability and robustness of metal-supported SOFCs, J. Power Sources, 175, 2008, pp. 447-451.
[6] S.C. Tsang, J.B. Claridge, M.L.H. Green, Recent advances in the conversion of methane to synthesis gas, Catalysis Today, 23, 1995, pp. 3-5.
[7] K. Ahmed, K. Foger, Kinetics of internal steam reforming of methane on Ni/YSZ based anodes for solid oxide fuel cells, Catalysis today, 63 (2000) 479-487.
[8] M. Krumpelt, T.R. Krause, J.D. Carter, J.P. Kopasz and S. Ahmed, Fuel processing for fuel cell systems in transportation and potable power applications, Catalysis Today, 77, 2002, pp. 3-16.
[9] Y. Lu, J. Chen, Y. Liu, Q. Xue and M. He, Highly sulphur-tolerant Pt/Ce0.8Gd0.2O1.9 catalyst for steam reforming of liquid hydrocarbons in fuel cell applications, Journal of catalysis, 254, 2008, 39-48.
[10] US-A-6 051 329.
[11] Y. Matsuzaki et I. Yasuda, The poisoning effect of sulfur-containing impurity gas on a SOFC anode : Part I. Dependance on temperature, time and impurity concentration, Solids State Ionics, 132, 2000, pp. 261-269.
[12] J. Mougin, S. Ravel, E. de Vito et M. Petitjean, Influence of fuel contaminants on SOFC operation: effect on performance and degradation mechanisms, in: Proceedings of SOFC X, ECS transaction, Nara, Japon (2007), vol. 7(1), pp. 459-468.
[13] J. Laurencin, F. Lefebvre-Joud et G. Delette, Impact of cell design and operating conditions on the performances of SOFC fuelled with methane, J. Power Sources, 177, 2008, pp. 355-368.
[14] United State Patent, N°US 5 496 655.
[15] US-A1-2005/0170234.
[16] US-A1-2007/0015015.
[17] J. Laurencin, G. Delette, F. Lefebvre-Joud et M. Dupeux, A numerical tool to estimate SOFC mechanical degradation: case of the planar cell configuration, J. Euro. Ceram. Soc., 28, 2008, pp. 1857-1869.
[18] Preparation of Porosity-Graded SOFC Anode Substrates, Fuel Cells, Volume 6, Issue 2, April, 2006, Pages: 113-116, P. Holtappels, C. Sorof, M. C. Verbraeken, S. Rambert, U. Vogt.
[19] Dry Powder Deposition and Compaction for Functionally Graded Ceramics, Journal of the American Ceramic Society, Volume 89, Issue 11, November 2006, Pages: 3406-3412, Zachary N. Wing, John W. Halloran.
[20] Tape Casting of Al2O3/ZrO2 Laminated Composites, Journal of the American Ceramic Society, Volume 69, Issue 8, August 1986, Pages: C-191-C-192, Philippe Boch, Thierry Chartier, Muriel Huttepain.
[21] Processing of Tape-Cast Laminates Prepared from Fine Alumina/Zirconia Powders, Journal of the American Ceramic Society, Volume 77, Issue 8, August 1994, Pages: 2145-2153, Kevin P. Plucknett, Calos H. Cáceres, Christopher Hughes, David S. Wilkinson.
[22] Direct Formation of Crystalline Gadolinium-Doped Ceria Powder via Polymerized Precursor Solution, Journal of the American Ceramic Society, Volume 85, Issue 7, July 2002, Pages: 1750-1752, Shuqiang Wang, Kunihiro Maeda, Masanobu Awano.
[23] EP-A1-1 920 833

## Revendications

1. Cellule de pile à combustible haute température « SOFC » à reformage interne d'hydrocarbures, dans laquelle ladite cellule est une cellule à métal support comprenant :
- un support métallique poreux (4) comprenant des pores (5) présentant des parois, ledit support poreux (4) comportant une première surface principale (7) et une seconde surface principale (8) ;
- une anode (2) adjacente à ladite seconde surface principale (8) ;
- un électrolyte (3) adjacent à ladite anode (2) ; et
- une cathode (1) adjacente audit électrolyte (3) ;
un catalyseur (9) de reformage d'au moins un hydrocarbure étant déposé sur les parois des pores (5) du support métallique poreux, et la quantité, concentration en catalyseur (9) dans le support métallique poreux (4) diminuant dans une direction de la première surface principale (7) dans le même sens qu'un sens d'écoulement d'un courant d'alimentation en hydrocarbure, le long de ladite première surface principale (7) à l'extérieur de la cellule.

2. Cellule de pile à combustible selon la revendication 1, dans laquelle la première surface principale (7) et la seconde surface principale (8) sont des surfaces planes et parallèles ; de préférence la première surface principale (7) est une surface inférieure et la seconde surface principale (8) est une surface supérieure, et l'anode (2), l'électrolyte (3) et la cathode (1) sont successivement empilés sur la seconde surface principale (8) du support métallique poreux (4).

3. Cellule de pile à combustible selon l'une quelconque des revendications précédentes, dans laquelle la porosité du support métallique poreux (4) est de 20 à 70 %, par exemple de 40%.

4. Cellule de pile à combustible selon l'une quelconque des revendications précédentes, dans laquelle le diamètre moyen des pores du support métallique poreux (4) est de 1 à 50 µm, de préférence de 5 à 15 µm, par exemple de 6 µm.

5. Cellule de pile à combustible selon l'une quelconque des revendications précédentes, dans laquelle la distance entre la première surface principale (7) et la seconde surface principale (8) du support métallique poreux (4) est de 200 à 1000 µm, de préférence de 400 à 500 µm.

6. Cellule de pile à combustible selon l'une quelconque des revendications précédentes, dans laquelle la quantité de catalyseur est de 0,1 à 5 % en masse par rapport à la masse du support métallique poreux.

7. Cellule de pile à combustible selon l'une quelconque des revendications précédentes, dans laquelle le catalyseur est un catalyseur de vapo-reformage ; de préférence le catalyseur est choisi parmi les métaux de transition tels que le nickel, le cobalt, le cuivre, le chrome, et le fer ; les métaux nobles ou précieux tels que le ruthénium, le platine, le rhodium, l'argent, l'iridium et le palladium ; et leurs mélanges.

8. Cellule de pile à combustible selon la revendication 7, dans laquelle le catalyseur est supporté, imprégné sur un support solide ; de préférence le support solide du catalyseur est choisi parmi les oxydes de métaux éventuellement dopés, tels que l'alumine ; la chromite de lanthane dopée au strontium ; et la cérine, éventuellement dopée par du gadolinium, du samarium ou de l'yttrium ; de préférence encore le catalyseur est un métal noble tel que le platine supporté par de la cérine dopée au gadolinium (« CGO »).

9. Cellule de pile à combustible selon l'une quelconque des revendications précédentes, dans laquelle le catalyseur se présente sous la forme de particules.

10. Cellule de pile à combustible selon l'une quelconque des revendication 1 à 9, dans laquelle la quantité, concentration en catalyseur diminue de manière continue ou par décréments dans le support métallique poreux (4) depuis une première extrémité (16) de celui-ci où se situe une arrivée (11) pour le courant d'alimentation en ledit hydrocarbure jusqu'à une seconde extrémité (17) de celui-ci où se situe une sortie (12) pour l'évacuation d'un courant d'au moins un produit du reformage.

11. Cellule selon la revendication 10, dans laquelle le support métallique poreux est divisé en n zones successives (13, 14, 15) depuis ladite première extrémité (16) jusqu'à ladite seconde extrémité (17), la quantité de catalyseur étant chaque fois diminuée, de préférence divisée par un nombre entier, d'une zone à la suivante.

12. Cellule selon la revendication 11, dans laquelle le support métallique poreux est divisé en une première (13), une deuxième (14) et une troisième (15) zones successives, de préférence d'égal volume depuis ladite première extrémité (16) jusqu'à ladite seconde extrémité (17), la quantité de catalyseur dans ladite deuxième zone (14), respectivement troisième zone (15), étant la moitié de la quantité de catalyseur dans ladite première zone (13), respectivement deuxième zone (14).

13. Cellule de pile à combustible selon l'une quelconque des revendications précédentes, dans laquelle la porosité du support métallique poreux (4) diminue depuis la première surface principale (7) jusqu'à la seconde surface principale (8), et le support peut comprendre alors depuis la première surface principale (7) jusqu'à la seconde surface principale (8) au moins une couche de forte porosité au contact de la première surface principale (7) et une couche de faible porosité au contact de la seconde surface principale.

14. Cellule de pile à combustible selon l'une quelconque des revendications précédentes, comprenant en outre une couche poreuse (10) en un métal choisi parmi le nickel, le cuivre, le manganèse, le cobalt, le fer et leurs alliages, déposée sur la première surface principale (7).

15. Cellule de pile à combustible selon l'une quelconque des revendications précédentes, dans laquelle le support métallique poreux (4) est en un métal ou alliage choisi parmi le fer, les alliages à base de fer, le chrome, les alliages à base de chrome, les alliages fer-chrome, les aciers inoxydables, le nickel, les alliages à base de nickel, les alliages nickel-chrome, les alliages contenant du cobalt, les alliages contenant du manganèse, l'aluminium, et les alliages contenant de l'aluminium.

16. Cellule de pile à combustible selon l'une quelconque des revendications précédentes, dans laquelle l'anode est en un cermet de nickel et de zircone stabilisée à l'oxyde d'yttrium (YSZ), ou en un cermet de nickel et de cérine stabilisée, dopée, à l'oxyde de scandium, d'ytterbium ou de gadolinium (CGO).

## Claims

1. Cell of a solid oxide fuel cell (SOFC) with internal reforming of hydrocarbons, in which said cell is a metal-supported cell comprising:
- a porous metallic support (4) comprising pores (5) having walls, said porous support (4) comprising a first main surface (7) and a second main surface (8);
- an anode (2) adjacent to said second main surface (8);
- an electrolyte (3) adjacent to said anode (2); and
- a cathode (1) adjacent to said electrolyte (3);
a catalyst (9) for reforming at least one hydrocarbon being deposited on the walls of the pores (5) of the porous metallic support, and the amount, concentration of catalyst (9) in the porous metallic support (4) decreasing in a direction of the first main surface (7) in the same direction as a flow direction of a hydrocarbon feed stream, along said first main surface (7) on the outside of the cell.

2. Cell of a fuel cell according to Claim 1, in which the first main surface (7) and the second main surface (8) are flat and parallel surfaces; preferably the first main surface (7) is a lower surface and the second main surface (8) is an upper surface, and the anode (2), the electrolyte (3) and the cathode (1) are successively stacked on the second main surface (8) of the porous metallic support (4).

3. Cell of a fuel cell according to any one of the preceding claims, in which the porosity of the porous metallic support (4) is from 20 to 70%, for example 40%.

4. Cell of a fuel cell according to any one of the preceding claims, in which the average diameter of the pores of the porous metallic support (4) is from 1 to 50 µm, preferably from 5 to 15 µm, for example 6 µm.

5. Cell of a fuel cell according to any one of the preceding claims, in which the distance between the first main surface (7) and the second main surface (8) of the porous metallic support (4) is from 200 to 1000 µm, preferably from 400 to 500 µm.

6. Cell of a fuel cell according to any one of the preceding claims, in which the amount of catalyst is from 0.1 to 5% by weight relative to the weight of the porous metallic support.

7. Cell of a fuel cell according to any one of the preceding claims, in which the catalyst is a steam reforming catalyst; preferably the catalyst is chosen from transition metals such as nickel, cobalt, copper, chromium and iron; noble or precious metals such as ruthenium, platinum, rhodium, silver, iridium and palladium; and mixtures thereof.

8. Cell of a fuel cell according to Claim 7, in which the catalyst is supported, impregnated on a solid support, preferably the solid support of the catalyst is chosen from optionally doped metal oxides, such as alumina; strontium-doped lanthanum chromite; and ceria, optionally doped with gadolinium, samarium or yttrium; more preferably the catalyst is a noble metal such as platinum supported by gadolinium-doped ceria (CGO).

9. Cell of a fuel cell according to any one of the preceding claims, in which the catalyst is in the form of particles.

10. Cell of a fuel cell according to any one of Claims 1 to 9, in which the amount, concentration of catalyst decreases continuously or in decrements in the porous metallic support (4) from a first end (16) of the latter where an inlet (11) for the feed stream of said hydrocarbon is located to a second end (17) of the latter where an outlet (12) for discharging a stream of at least one reforming product is located.

11. Cell according to Claim 10, in which the porous metallic support is divided into n successive zones (13, 14, 15) from said first end (16) to said second end (17), the amount of catalyst being decreased each time, preferably divided by an integer, from one zone to the next.

12. Cell according to Claim 11, in which the porous metallic support is divided into a first (13), a second (14) and a third (15) successive zones, preferably of equal volume, from said first end (16) to said second end (17), the amount of catalyst in said second zone (14), respectively third zone (15), being half of the amount of catalyst in said first zone (13), respectively second zone (14).

13. Cell of a fuel cell according to any one of the preceding claims, in which the porosity of the porous metallic support (4) decreases from the first main surface (7) to the second main surface (8), and the support may then comprise, from the first main surface (7) to the second main surface (8), at least one layer of high porosity in contact with the first main surface (7) and a layer of low porosity in contact with the second main surface.

14. Cell of a fuel cell according to any one of the preceding claims, comprising, in addition, a porous layer (10) made of a metal chosen from nickel, copper, manganese, cobalt, iron and alloys thereof, deposited on the first main surface (7).

15. Cell of a fuel cell according to any one of the preceding claims, in which the porous metallic support (4) is made of a metal or alloy chosen from iron, iron-based alloys, chromium, chromium-based alloys, iron-chromium alloys, stainless steels, nickel, nickel-based alloys, nickel-chromium alloys, alloys containing cobalt, alloys containing manganese, aluminium, and alloys containing aluminium.

16. Cell of a fuel cell according to any one of the preceding claims, in which the anode is made of a cermet of nickel and of yttrium oxide-stabilized zirconia (YSZ), or of a cermet of nickel and of ceria stabilized or doped with scandium, ytterbium or gadolinium oxide (CGO).

## Patentansprüche

1. Zelle für Hochtemperatur-Brennstoffzelle des Typs SOFC mit interner Kohlenwasserstoffreformierung, bei der die genannte Zelle eine metallsubstratgetragene Zelle ist, umfassend :
- einen porösen metallischen Träger (4) mit Wände aufweisenden Poren (5), wobei der poröse Träger (4) eine erste Hauptfläche (7) und eine zweite Hauptfläche (8) umfasst ;
- eine an die genannte zweite Hauptfläche (8) angrenzende Anode (2) ;
- einen an die genannte Anode (2) angrenzenden Elektrolyt (3) ; und
- eine an den genannten Elektrolyt (3) angrenzende Katode (1) ;
wobei ein Reformierungskatalysator (9) wenigstens eines Kohlenwasserstoffs auf den Wänden der Poren (5) des porösen metallischen Trägers abgeschieden ist, und die Menge, Konzentration an Katalysator (9) in dem porösen metallischen Träger (4) in derjenigen Richtung der ersten Hauptfläche (7) abnimmt, die dieselbe Richtung wie eine Strömungsrichtung eines Kohlenwasserstoff-Versorgungsstroms längs der genannten ersten Hauptfläche (7) auf der Außenseite der Zelle ist.

2. Zelle für Brennstoffzelle nach Anspruch 1, bei der die erste Hauptfläche (7) und die zweite Hauptfläche (8) ebene und parallele Flächen sind, wobei vorzugsweise die erste Hauptfläche (7) eine untere Fläche und die zweite Hauptfläche (8) eine obere Fläche ist, und wobei die Anode (2), der Elektrolyt (3) und die Katode (1) sukzessive auf der zweiten Hauptfläche (8) des porösen metallischen Trägers (4) gestapelt sind.

3. Zelle für Brennstoffzelle nach einem der vorhergehenden Ansprüche, bei der die Porosität des porösen metallischen Trägers (4) 20 bis 70 % beträgt, zum Beispiel 40 % ist.

4. Zelle für Brennstoffzelle nach einem der vorhergehenden Ansprüche, bei der der mittlere Durchmesser der Poren des porösen metallischen Trägers (4) 1 bis 50 µm, vorzugsweise 5 bis 15 µm, zum Beispiel 6 µm beträgt.

5. Zelle für Brennstoffzelle nach einem der vorhergehenden Ansprüche, bei der der Abstand zwischen der ersten Hauptfläche (7) und der zweiten Hauptfläche (8) des porösen metallischen Trägers (4) 200 bis 1000 µm, vorzugsweise 400 bis 500 µm beträgt.

6. Zelle für Brennstoffzelle nach einem der vorhergehenden Ansprüche, bei der die Katalysatormenge 0,1 bis 5 % Masseanteil in Bezug auf die Masse des porösen metallischen Trägers beträgt.

7. Zelle für Brennstoffzelle nach einem der vorhergehenden Ansprüche, bei der der Katalysator ein Dampfreformierungskatalysator ist ; wobei der Katalysator vorzugsweise ausgewählt wird unter den Übergangsmetallen wie zum Beispiel Nickel, Kobalt, Kupfer, Chrom und Eisen ; den Edelmetallen wie zum Beispiel Ruthenium, Platin, Rhodium, Silber, Iridium, und Palladium ; und ihren Gemischen.

8. Zelle für Brennstoffzelle nach Anspruch 7, bei der ein fester Träger mit dem Katalysator imprägniert bzw. beschichtet ist ; vorzugsweise wird der feste Träger des Katalysators ausgewählt unter den eventuell dotierten Metalloxiden wie zum Beispiel Aluminiumoxid ; Strontium-dotiertem Lanthanchromit ; und Cerin, eventuell dotiert mit Gadolinium, Samarium oder Yttrium ; noch besser ist der Katalysator ein Edelmetall wie zum Beispiel Platin, getragen von Gadolinium-dotiertem Cerin ("CGO").

9. Zelle für Brennstoffzelle nach einem der vorhergehenden Ansprüche, bei der der Katalysator sich in Form von Partikeln präsentiert.

10. Zelle für Brennstoffzelle nach einem der Ansprüche 1 bis 9, bei der die Menge, Konzentration an Katalysator in dem porösen metallischen Träger (4) kontinuierlich oder in Dekrementen abnimmt, von einem ersten Ende (16) von diesem, wo sich ein Eingang (11) für den Kohlenwasserstoff-Versorgungsstrom befindet, bis zu einem zweiten Ende (17) von diesem, wo sich ein Ausgang (12) für den Abfluss eines Stroms wenigstens eines Produkts der Reformierung befindet.

11. Zelle für Brennstoffzelle nach Anspruch 10, bei der der poröse metallische Träger von dem genannten ersten Ende (16) bis zu dem genannten zweiten Ende (17) in n aufeinanderfolgende Zonen (13, 14, 15) unterteilt ist, wobei die Katalysatormenge jedes Mal, von einer Zone zur nächsten, reduziert ist, vorzugsweise geteilt durch eine ganze Zahl ist.

12. Zelle für Brennstoffzelle nach Anspruch 11, bei der der poröse metallische Träger unterteilt ist in eine erste (13), eine zweite (14) und eine dritte (15) aufeinanderfolgende Zonen, von vorzugsweise gleichem Volumen von dem genannten ersten Ende (16) bis zu dem genannten zweiten Ende (17), wobei die Katalysatormenge in der genannten zweiten Zone (14), respektive dritten Zone (15), halb so groß ist wie die Katalysatormenge in der genannten ersten Zone (13), respektive zweiten Zone (14).

13. Zelle für Brennstoffzelle nach einem der vorhergehenden Ansprüche, bei der die Porosität des porösen metallischen Trägers (4) von der ersten Hauptfläche (7) bis zu der zweiten Hauptfläche (8) abnimmt, wobei der Träger dann von der ersten Hauptfläche (7) bis zu der zweiten Hauptfläche (8) wenigstens eine Schicht von starker Porosität in Kontakt mit der ersten Hauptfläche (7) und eine Schicht von schwacher Porosität in Kontakt mit der zweiten Hauptfläche (8) umfasst.

14. Zelle für Brennstoffzelle nach einem der vorhergehenden Ansprüche, umfassend außerdem eine auf der ersten Hauptfläche (7) abgeschiedene poröse Schicht (10) aus einem unter Nickel, Kupfer, Mangan, Kobalt, Eisen und ihren Legierungen ausgesuchten Metall.

15. Zelle für Brennstoffzelle nach einem der vorhergehenden Ansprüche, bei der der poröse metallische Träger (4) aus einem Metall oder einer Legierung ist, ausgewählt unter Eisen, den Legierungen auf der Basis von Eisen; Chrom, den Legierungen auf der Basis von Chrom, den Eisen-Chrom-Legierungen, den rostfreien Stählen, Nickel, den Legierungen auf der Basis von Nickel, den Nickel-Chrom-Legierungen, den Kobalt enthaltenden Legierungen, den Mangan enthaltenden Legierungen, Aluminium, und den Aluminium enthaltenden Legierungen.

16. Zelle für Brennstoffzelle nach einem der vorhergehenden Ansprüche, bei der die Anode aus einer Nickel- und Zirkon-Metallkeramik ist, stabilisiert mit Yttriumoxid (YSZ), oder aus einer Nickel- und Cerin-Metallkeramik, stabilsiert, dotiert mit dem Oxid von Scandium, Yttrium oder Gadolinium (CGO).
